# EUROPÄISCHE PATENTSCHRIFT

(11) **EP 4 201 790 B1**
(45) Veröffentlichungstag und Bekanntmachung des Hinweises auf die Patenterteilung: **22.07.2026**
(21) Anmeldenummer: 22207162.3
(22) Anmeldetag: 14.11.2022
(51) Int. Cl.: B62D 21/11

(54) **HILFSRAHMEN FÜR EIN KRAFTFAHRZEUG, AGGREGATLAGERSYSTEM UND FAHRZEUG**
SUBFRAME FOR A MOTOR VEHICLE, AGGREGATE BEARING SYSTEM AND VEHICLE
CHÂSSIS AUXILIAIRE POUR VÉHICULE AUTOMOBILE, SYSTÈME DE PALIER D'AGRÉGAT ET VÉHICULE

(30) Priorität: 22.12.2021 DE 102021214942
(43) Veröffentlichungstag der Anmeldung: 28.06.2023
(73) Patentinhaber: VOLKSWAGEN AG, 38440 Wolfsburg (DE)
(72) Erfinder: Pavel, Alexander, 38550 Isenbüttel (DE); Geßner, Denis, 33649 Bielefeld (DE); Fritzsche, Erik, 38547 Calberlah (DE); Danschacher, Markus, 38110 Braunschweig (DE)
(74) Vertreter: Massinger, Marco

(56) Entgegenhaltungen:
- CN-B- 105 324 295
- CN-U- 203 819 342
- DE-A1- 102012 005 561
- DE-A1- 102015 016 390
- DE-A1- 102017 002 972
- DE-A1- 102017 004 132
- US-A1- 2014 117 654

## Beschreibung

### Hilfsrahmen für ein Kraftfahrzeug, Aggregatlagersystem und Fahrzeug

Die Erfindung betrifft einen Hilfsrahmen für ein Kraftfahrzeug, mit einem ersten Anbindungspunkt und einem zweiten Anbindungspunkt zur Anbindung an einen Fahrzeugaufbau, mit mindestens einer Hülse zur Aufnahme eines Aggregatlagers zur Lagerung eines Antriebsaggregats, wobei der erste Anbindungspunkt vom zweiten Anbindungspunkt beabstandet ist, wobei die Anbindungspunkte mit einem Verbindungselement in Querrichtung des Fahrzeugs miteinander verbunden sind.

Daneben betrifft die Erfindung ein Aggregatlagersystem für ein Fahrzeug.

Außerdem betrifft die Erfindung ein Fahrzeug mit mindestens einem elektrischen Aggregat und einem Aggregatlagersystem.

Aus dem Stand der Technik sind Hilfsrahmen im vorderen oder hinteren Bereich von Kraftfahrzeugen in einer Vielzahl an Ausgestaltungen bekannt. Hilfsrahmen dienen der Lagerung von Antriebsaggregaten, Radaufhängungselementen oder ähnlichen Elementen. In der Regel werden die Aggregate über schwingungsdämpfende Lager mit dem Hilfsrahmen verbunden, wobei der Hilfsrahmen mit dem Fahrzeugaufbau starr verbunden wird. Dazu sind Anbindungspunkte jeweils links und rechts am Fahrzeugaufbau vorgesehen, an denen der Hilfsrahmen befestigt wird. Aufgrund der Funktion des Hilfsrahmens, beispielsweise zum Halten von Antriebsaggregaten, ist es notwendig, dass dieser entsprechend verwindungssteif ausgestaltet ist.

Die Druckschrift DE 10 2017 004 132 A1 offenbart einen Fahrschemel, sprich einen Hilfsrahmen, für ein Fahrzeug mit mehreren Lagerstellen und Antriebslagerstellen, gemäß dem Oberbegriff der Ansprüche 1 und 9.

Die Druckschriften DE 10 2015 016 390 A1, CN 203 819 342 U, US 2014 0 117 654 A1 und CN 105 324 295 B offenbaren Hilfsrahmen, die mittels Anbindungspunkten an einer Fahrzeugstruktur befestigt werden können, wobei Lagerhülsen zur Lagerung von Aggregaten zum Einsatz kommen.

Ein Nachteil der vorgenannten Hilfsrahmen besteht darin, dass derartige Konstruktionen jeweils nur für spezielle Aggregate ausgestaltet sind. Aufgrund signifikanter Unterschiede in der Geometrie und Lagerung von unterschiedlichen Aggregaten gestaltet sich die Findung einer einheitlichen Aggregatlagerung von verschiedenen Motoren als schwierig.

Aus dem Stand der Technik sind in diesem Zusammenhang Aggregatlagerungen bekannt, bei denen zusätzliche Aggregatbrücken verwirklicht werden, die als zusätzliche Anbauteile nötig sind. Dadurch erhöht sich der Montageaufwand.

Der Erfindung liegt daher die Aufgabe zugrunde, einen Hilfsrahmen für ein Kraftfahrzeug, ein Aggregatlagersystem sowie ein Fahrzeug mit einem Aggregatlagersystem anzugeben, bei denen signifikant verschiedene Aggregate mit lediglich einer Variante eines Hilfsrahmens und ohne zusätzliche Anbauteile verbaut werden können.

Diese Aufgabe ist bei der vorliegenden Erfindung zunächst durch die Merkmale des Patentanspruchs 1 gelöst. Erfindungsgemäß sind ein dritter Anbindungspunkt und ein vierter Anbindungspunkt vorgesehen, wobei der erste Anbindungspunkt, eine erste Hülse und der dritte Anbindungspunkt im eingebauten Zustand in einer ersten Linie in Längsrichtung des Fahrzeugs liegen und wobei der zweite Anbindungspunkt, eine zweite Hülse und der vierte Anbindungspunkt im eingebauten Zustand in einer zweiten Linie in Längsrichtung des Fahrzeugs liegen, wobei der erste Anbindungspunkt, eine erste Hülse und der dritte Anbindungspunkt im eingebauten Zustand etwa in einer ersten Linie in Querrichtung des Fahrzeugaufbaus liegen, und dass der zweite Anbindungspunkt, eine zweite Hülse und der vierte Anbindungspunkt im eingebauten Zustand etwa in einer zweiten Linie in Querrichtung des Fahrzeugaufbaus liegen.

Ein erster Vorteil des erfindungsgemäßen Hilfsrahmens besteht darin, dass infolge der Integration der Hülsen in den Hilfsrahmen, mit entsprechender verstärkter Abstützung, auf weitere Anbauteile verzichtet werden kann. Hierdurch kann die Fertigungszeit reduziert werden, da der Hilfsrahmen bereits zusätzlich mit eingepressten Aggregatlagern ausgeliefert werden kann, anstatt einer Kombination aus Hilfsrahmen, Aggregatbrücke und zwei Konsolen einzeln im Rahmen der Achsvormontage zu nutzen, die einzeln miteinander verschraubt werden müssen. Aufgrund der doppelten Abstützung, beispielsweise am Längsträger des Fahrzeugaufbaus, erhält man eine höhere Freiheit bezüglich der Auswahl der Position der Aggregatlager, da durch eine ausreichende Abstützung größere Hebelarme zu den ursprünglichen Anbindungspunkten des Hilfsrahmens an den Längsträger nicht direkt gleichbedeutend mit Nachteilen bezüglich der Betriebsfestigkeit des Hilfsrahmens sind.

Unter einem Anbindungspunkt ist im Rahmen der Erfindung ein Befestigungspunkt zu verstehen, über den der Hilfsrahmen mit dem Fahrzeugaufbau verbunden werden kann. Die Verbindung kann über übliche Schraubverbindungen erfolgen oder weitere gängige Befestigungsmöglichkeiten.

Bei dem Fahrzeugaufbau handelt es sich um Rahmen und Träger, die zur Verbindung einzelner Karosserieteile vorgesehen sind und die als Auflager dienen können, an denen sich die Anbindungspunkte des Hilfsrahmens abstützen können. Der Fahrzeugaufbau umfasst beispielsweise auch Längsträger, an denen der Hilfsrahmen befestigt werden kann.

Die Hülse ist bevorzugt als Hohlzylinder ausgestaltet, in den ein Lager einführbar ist, das sich somit an dem Hohlzylinder abstützen kann. Ein Aggregatlager kann entsprechend in die Hülse eingesteckt werden, so dass das Aggregat über die Aggregatlager mit dem Hilfsrahmen verbunden ist, wobei der Hilfsrahmen entsprechend an dem Fahrzeugaufbau über die vier Anbindungspunkte befestigbar ist.

Ein Aggregatlager wird sowohl auf der rechten Seite des Fahrzeugs als auch auf der linken Seite das Fahrzeugs benötigt, so dass entsprechend auch die erste Hülse und die zweite Hülse beabstandet voneinander angeordnet sind. Eine Hülse ist im rechten Bereich des Fahrzeugs angeordnet, wohingegen die zweite Hülse im linken Bereich des Fahrzeugs verortet ist. Die beiden Hülsen und die entsprechenden Anbindungspunkte sind mit einem Verbindungselement in Querrichtung des Fahrzeugs miteinander mittelbar verbunden, so dass sich insgesamt ein Hilfsrahmen aus mehreren Elementen ergibt.

Auf den jeweiligen Seiten des Fahrzeugs, also der rechten Seite und der linken Seite, sind jeweils zwei Anbindungspunkte und eine Hülse vorgesehen. Jeweils zwei Anbindungspunkte und eine Hülse liegen etwa auf einer Linie auf der linken Seite vom Fahrzeug beziehungsweise dem Fahrzeugaufbau und die beiden übrigen Anbindungspunkte und die zweite Hülse liegen etwa auf einer Linie in Längsrichtung der rechten Seite des Fahrzeugaufbaus.

Weitere bevorzugte Ausgestaltungen der Erfindung ergeben sich aus den übrigen, in den Unteransprüchen genannten Merkmalen.

Bei einer ersten Ausgestaltung des erfindungsgemäßen Hilfsrahmens ist vorgesehen, dass die erste Hülse zwischen dem ersten Anbindungspunkt und dem dritten Anbindungspunkt angeordnet ist und/oder dass die zweite Hülse zwischen dem zweiten Anbindungspunkt und dem vierten Anbindungspunkt angeordnet ist. Das bedeutet, dass die beiden Anbindungspunkte jeweils außen an der jeweiligen Hülse angeordnet sind. Auf diese Weise sind die Hebel, an denen die Hülse am Fahrzeugaufbau befestigt ist, möglichst kurz gehalten, so dass eine optimale Kraftübertragung beziehungsweise eine optimale Abstützmöglichkeit gegeben ist, um den Hilfsrahmen entsprechend in den Fahrzeugaufbau zu integrieren.

Erfindungsgemäß ist vorgesehen, dass der erste Anbindungspunkt, die erste Hülse und der dritte Anbindungspunkt mittels einer Versteifungsstruktur miteinander verbunden sind und/oder dass der zweite Anbindungspunkt, die zweite Hülse und der vierte Anbindungspunkt mittels einer Versteifungsstruktur miteinander verbunden sind. Durch die Versteifungsstruktur wird der Aufbau des Hilfsrahmens verstärkt. Eine biege- und verwindungssteife Verbindung ermöglicht es, dass der Hilfsrahmen im Bereich der Hülse kaum nachgeben kann, so dass eine passgenaue Verbindung eines Aggregats mit dem Hilfsrahmen realisiert werden kann. Ein möglicher Ausgleich, der durch verursachte Schwingungen nötig werden könnte, kann durch gedämpfte Aggregatlager realisiert werden.

Um die Stabilität der Versteifungsstruktur zu erhöhen, ist erfindungsgemäß vorgesehen, dass die Versteifungsstruktur mehrere Blechstrukturen umfasst, dass die erste Blechstruktur mit einer Schweißverbindung mit dem ersten Anbindungspunkt und der ersten Hülse verbunden ist und dass eine zweite Blechstruktur mit einer Schweißverbindung mit dem dritten Anbindungspunkt und der ersten Hülse verbunden ist und/oder dass eine dritte Blechstruktur mit einer Schweißverbindung mit dem zweiten Anbindungspunkt und der zweiten Hülse verbunden ist und dass eine vierte Blechstruktur mit einer Schweißverbindung mit dem vierten Anbindungspunkt und der zweiten Hülse verbunden ist.

Die Verbindung der Hülse zur Lageraufnahme mit den Blechen erfolgt folglich durch ein Schweißverfahren. Durch diese Art der Befestigung ist sichergestellt, dass eine ausreichende Abstützung der Aggregatelasten im Fahrbetrieb gewährleistet ist. Des Weiteren werden kritische Bereiche des Hilfsrahmens bezüglich der Betriebsfestigkeit entlastet. Weiterhin kann auf zusätzliche Anbauteile und somit Schraubstellen verzichtet werden. Ein weiterer Vorteil dieser Erfindung ist eine gewisse Freiheit in der Wahl beziehungsweise der Festlegung der Lage der Aggregatlager.

Für eine noch effektivere Abstützung ist bei einer weiteren vorteilhaften Ausgestaltung des erfindungsgemäßen Hilfsrahmens vorgesehen, dass mindestens eine der Blechstrukturen mehrere Blechelemente umfasst und dass jedes Blechelement gesondert mit der ersten Hülse beziehungsweise der zweiten Hülse verschweißt ist. Auf diese Weise wird die Anzahl der Abstützpunkte der Hülse erhöht und die auf die einzelnen Blechelemente wirkenden Kräfte entsprechend aufgeteilt.

Um die Flexibilität in Bezug auf den Einsatzzweck weiter zu erhöhen, ist bei einer weiteren Ausgestaltung des erfindungsgemäßen Hilfsrahmens mindestens eine erste Motorlagerhülse und eine zweite Motorlagerhülse vorgesehen. Die erste Motorlagerhülse ist zwischen dem ersten Anbindungspunkt und dem dritten Anbindungspunkt angeordnet, wobei die zweite Motorlagerhülse zwischen dem zweiten Anbindungspunkt und dem vierten Anbindungspunkt angeordnet ist.

Je nach vorhandener Bauraumsituation und erforderlicher Schraubrichtung von Motorlagern ist analog zu einer zusätzlichen Abstützung, beispielsweise an einem Längsträger des Fahrzeugaufbaus, auch eine Abstützung entgegengesetzt direkt auf dem Hilfsrahmen möglich. Somit erfolgt die Abstützung nicht nach oben, sondern nach unten auf die vorhandene Hilfsrahmengeometrie, jedoch ebenfalls in Längsrichtung des Fahrzeugs beziehungsweise des Fahrzeugaufbaus. Somit ist weiterhin eine Verschraubung der Motorlager in Fahrzeugquerrichtung möglich.

Die vorgenannte Aufgabe wird außerdem gelöst von einem Aggregatlagersystem für ein Fahrzeug, mit einem Fahrzeugaufbau mit mindestens einem Längsträger. Darüber hinaus umfasst das Aggregatlagersystem einen erfindungsgemäß ausgestalteten Hilfsrahmen und jeweils ein in der ersten Hülse und der zweiten Hülse angeordnetes Aggregatlager. Die obigen Ausführungen bezüglich des erfindungsgemäßen Hilfsrahmens gelten entsprechend auch für das erfindungsgemäße Aggregatlagersystem.

Das Aggregatlagersystem ist entsprechend an einem Fahrzeug beziehungsweise dem Fahrzeugaufbau befestigbar. Bei dem Fahrzeugaufbau handelt es sich um Rahmen und Träger, die zur Verbindung einzelner Karosserieteile vorgesehen sind und die als Auflager dienen können, an denen sich die Anbindungspunkte des Hilfsrahmens abstützen können.

Bei einer ersten vorteilhaften Ausgestaltung des Aggregatlagersystems ist vorgesehen, dass der erste, zweite, dritte und vierte Anbindungspunkt an mindestens einem Längsträger des Fahrzeugaufbaus befestigt, vorzugsweise geschweißt, ist. Die Verbindung zwischen dem Hilfsrahmen und dem Fahrzeugaufbau kann beispielsweise auch durch eine Schraubverbindung erfolgen. Am Längsträger kann die Befestigung des Hilfsrahmens plan erfolgen. Darüber hinaus kann die Befestigung in Richtung der Schwerkraft erfolgen, so dass nach unten wirkende Kräfte zunächst keine Belastung auf die Verbindung am Längsträger darstellen.

Bei einer alternativen Ausgestaltung des erfindungsgemäßen Aggregatlagersystems ist vorgesehen, dass der dritte Anbindungspunkt und/oder der vierte Anbindungspunkt am Fahrzeugaufbau befestigt, vorzugsweise geschweißt, ist. Die Verbindung kann beispielsweise auch durch eine Schraubverbindung realisiert werden. Denkbar ist entsprechend alternativ zur Befestigung des Hilfsrahmens an einem Längsträger, dass der Hilfsrahmen an einer anderen Stelle des Fahrzeugaufbaus befestigt wird. Somit kann zum einen die Richtung der abstützenden Kraft des Anbindungspunktes für den Einzelfall vorteilhaft beeinflusst werden. Zum anderen ist es möglich, bauraumbedingte Engstellen zu umgehen und eine montagefreundliche Position zur Anbindung des Hilfsrahmens zu finden.

Die vorgenannte Aufgabe wird außerdem gelöst von einem Fahrzeug, insbesondere Kraftfahrzeug, mit mindestens einem elektrischen Aggregat und Aggregatlagersystem, wobei das Aggregat mit dem Aggregatlagersystem am Fahrzeug befestigt ist. Es ist vorgesehen, dass das Aggregatlagersystem erfindungsgemäß ausgestaltet ist. Die obigen Ausführungen betreffend den erfindungsgemäßen Hilfsrahmen sowie betreffend das erfindungsgemäße Aggregatlagersystem gelten entsprechend auch für das erfindungsgemäße Fahrzeug.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Hilfsrahmens beziehungsweise eines Aggregatlagersystems mit vier Anbindungspunkten an einen Fahrzeugaufbau,
- Figur 2: eine schematische Darstellung eines Ausführungsbeispiels eines erfindungsgemäßen Aggregatlagersystems in einem Fahrzeugaufbau mit einer weiteren Blechstruktur und
- Figur 3: eine schematische Darstellung eines Hilfsrahmens mit einer zusätzlichen Motorlagerhülse.

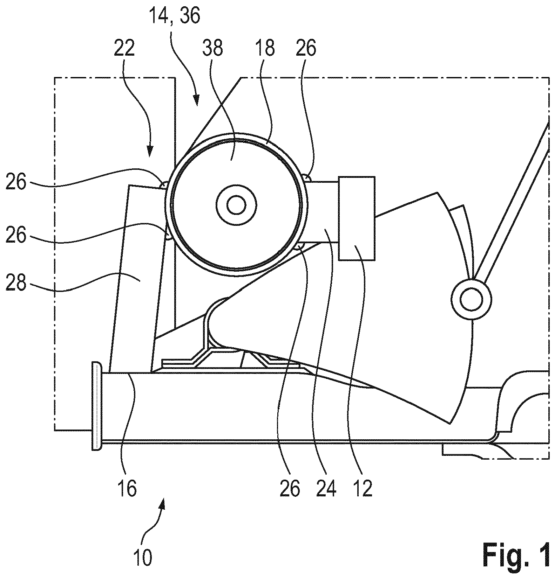

Figur 1 zeigt einen Hilfsrahmen 10 für ein Kraftfahrzeug. Der Hilfsrahmen 10 ist zunächst über einen ersten Anbindungspunkt 12 an einem Fahrzeugaufbau 14 des Kraftfahrzeugs befestigt. Zusätzlich ist der Hilfsrahmen 10 über einen hier nicht dargestellten zweiten Anbindungspunkt auf der gegenüberliegenden Seite des Fahrzeugaufbaus 14, einen dritten Anbindungspunkt 16 und einen hier nicht dargestellten vierten Anbindungspunkt auf der gegenüberliegenden Seite des Fahrzeugaufbaus 14 befestigt. Bei dem Fahrzeugaufbau 14 handelt es sich um Rahmen und Träger, die zur Verbindung einzelner Karosserieteile vorgesehen sind und die als Auflager dienen können, an denen sich die Anbindungspunkte des Hilfsrahmens 10 abstützen können. Die Anbindungspunkte sind Befestigungspunkte, über die der Hilfsrahmen 10 mit dem Fahrzeugaufbau 14 verbunden werden kann. Die Verbindung ist im vorliegenden Fall mittels eines Schweißverfahrens hergestellt. Alternativ kann die Verbindung aber auch durch eine Schraubverbindung realisiert werden.

Zwischen dem ersten Anbindungspunkt 12 und dem dritten Anbindungspunkt 16 ist eine erste Hülse angeordnet. Auf der gegenüberliegenden Seite des Fahrzeugaufbaus 14 ist eine hier nicht dargestellte zweite Hülse zwischen dem zweiten Anbindungspunkt und dem vierten Anbindungspunkt angeordnet. Die erste Hülse 18 ist als Hohlzylinder ausgestaltet, in den ein Lager einführbar ist, das sich an dem Hohlzylinder abstützen kann. Der erste Anbindungspunkt 12, die erste Hülse 18 und der dritte Anbindungspunkt 16 liegen auf einer ersten Linie 20 in einer Draufsicht auf den Fahrzeugaufbau 14 in Längsrichtung des Fahrzeugaufbaus 14.

Der erste Anbindungspunkt 12, die erste Hülse 18 und der dritte Anbindungspunkt 16 sind mittels einer Versteifungsstruktur 22 miteinander verbunden. Durch die Versteifungsstruktur 22 wird der Aufbau des Hilfsrahmens 10 verstärkt. Eine biege- und verwindungssteife Verbindung ermöglicht es, dass der Hilfsrahmen 10 im Bereich der ersten Hülse 18 kaum nachgeben kann, so dass eine passgenaue Verbindung eines Aggregats mit dem Fahrzeugaufbau 14 realisiert werden kann. Ein möglicher Ausgleich, der durch verursachte Schwingungen nötig werden könnte, kann durch gedämpfte Aggregatlager realisiert werden. Die Versteifungsstruktur 22 umfasst eine erste Blechstruktur 24, die mittels einer Schweißverbindung 26 mit dem ersten Anbindungspunkt 12 und der ersten Hülse 18 verbunden ist. Daneben weist die Versteifungsstruktur 22 eine zweite Blechstruktur 28 auf, die mittels einer Schweißverbindung 26 mit dem dritten Anbindungspunkt 16 und der ersten Hülse 18 verbunden ist.

Der Hilfsrahmen 10 ist Teil eines Aggregatlagersystems 34. Dabei sind der erste Anbindungspunkt 12 und der dritte Anbindungspunkt 16 an einem Längsträger 36 des Fahrzeugaufbaus 14 angeordnet und befestigt. Die erste Hülse 18 ist mit einem Aggregatlager 38 verbunden. Das Aggregatlager 38 ist derart in die erste Hülse 18 eingesteckt, dass ein hier nicht dargestelltes Aggregat über die Aggregatlager 38 mit dem Hilfsrahmen 10 verbunden ist, wobei der Hilfsrahmen 10 entsprechend an dem Fahrzeugaufbau 14 über die vier Anbindungspunkte befestigt ist.

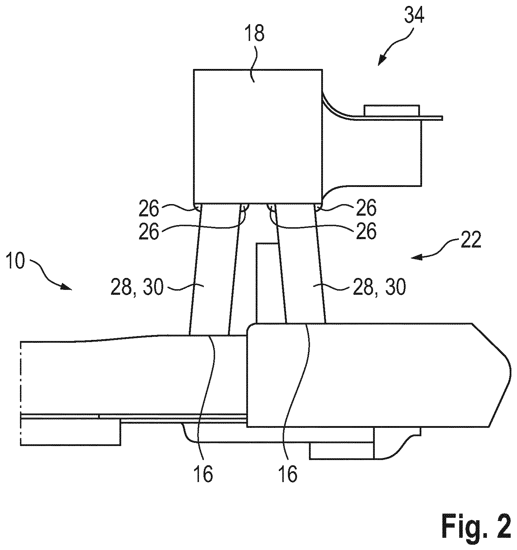

Figur 2 zeigt das Ausführungsbeispiel gemäß Figur 1 aus einer anderen Perspektive. In Figur 2 ist ersichtlich, dass die erste Blechstruktur 24 der Versteifungsstruktur 22 mehrere Blechelemente 30 umfasst. Auf diese Weise wird eine effektivere Abstützung erreicht. Jedes Blechelement 30 ist gesondert mit der ersten Hülse 18 beziehungsweise der zweiten Hülse auf der gegenüberliegenden Seite des Hilfsrahmens 10 verschweißt. Auf diese Weise wird die Anzahl der Abstützpunkte der ersten Hülse 18 erhöht und die auf die einzelnen Blechelemente 30 wirkenden Kräfte entsprechend aufgeteilt.

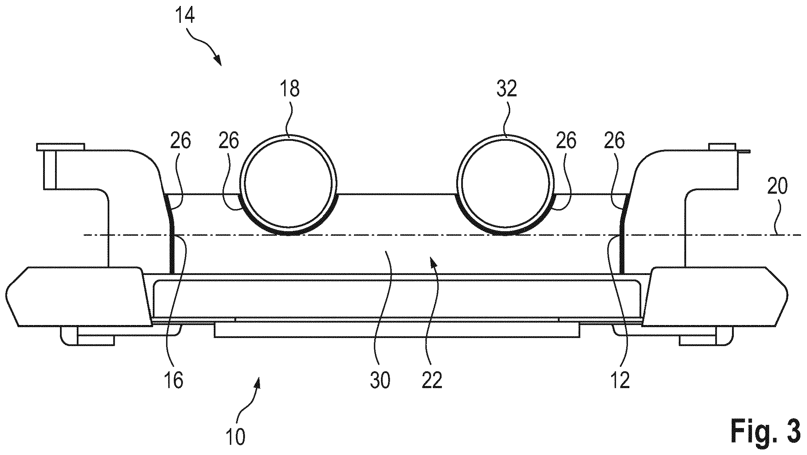

Figur 3 zeigt ein weiteres Ausführungsbeispiel eines erfindungsgemäßen Hilfsrahmens 10 als Teil eines Aggregatlagersystems 34 für ein Kraftfahrzeug. Um die Flexibilität in Bezug auf den Einsatzzweck weiter zu erhöhen, ist eine erste Motorlagerhülse vorgesehen. In dieser Darstellung erfolgt eine Verschraubung eines Aggregates in Fahrzeuglängsrichtung, sprich in Längsrichtung des Fahrzeugsaufbaus 14, entsprechend ist sowohl die erste Hülse 18 als auch die erste Motorlagerhülse dargestellt. Der Hauptunterschied zwischen Figur 3 und den Figuren 1 und 2 liegt in der Verschraubungsrichtung des Aggregates. In den Figuren 1 und 2 wird das nicht dargestellte Aggregat in Fahrzeugquerrichtung eingebaut. Entsprechend liegen der erste Anbindungspunkt 12, die erste Hülse 18 und der dritte Anbindungspunkt 16 in einer Linie 20 in Längsrichtung des Fahrzeugaufbaus. In Figur 3 liegen der erste Anbindungspunkt 16, die erste Hülse 18 und der dritte Anbindungspunkt 16 in einer Linie in Querrichtung des Fahrzeugaufbaus.14. Entsprechend liegen der zweite Anbindungspunkt, die zweite Hülse 32 und der vierte Anbindungspunkt in einer Linie 20 in Querrichtung des Fahrzeugaufbaus 14. Die Versteifungsstruktur 22 ist in diesem Ausführungsbeispiel aus einem einzigen Blechelement 30 ausgestaltet.

### Bezugszeichenliste

- 10: Hilfsrahmen
- 12: erster Anbindungspunkt
- 14: Fahrzeugaufbau
- 16: dritter Anbindungspunkt
- 18: erste Hülse
- 20: erste Linie
- 22: Versteifungsstruktur
- 24: erste Blechstruktur
- 26: Schweißverbindung
- 28: zweite Blechstruktur
- 30: Blechelement
- 32: zweite Hülse
- 34: Aggregatlagersystem
- 36: Längsträger
- 38: Aggregatlager

## Patentansprüche

1. Hilfsrahmen (10) für ein Kraftfahrzeug, mit einem ersten Anbindungspunkt (12) und einem zweiten Anbindungspunkt zur Anbindung an einen Fahrzeugaufbau (14),
mit mindestens einer Hülse (18) zur Aufnahme eines Aggregatlagers (38) zur Lagerung eines Antriebsaggregats,
wobei der erste Anbindungspunkt (12) vom zweiten Anbindungspunkt beabstandet ist, wobei die Anbindungspunkte mit einem Verbindungselement in Querrichtung des Fahrzeugaufbaus (14) miteinander verbunden sind,
wobei ein dritter Anbindungspunkt (16) und ein vierter Anbindungspunkt vorgesehen sind,
wobei der erste Anbindungspunkt (12), eine erste Hülse (18) und der dritte Anbindungspunkt (16) im eingebauten Zustand in einer ersten Linie (20) in Längsrichtung des Fahrzeugaufbaus (14) liegen und
wobei der zweite Anbindungspunkt, eine zweite Hülse und der vierte Anbindungspunkt im eingebauten Zustand in einer zweiten Linie in Längsrichtung des Fahrzeugaufbaus (14) liegen,
wobei
der erste Anbindungspunkt (12), die erste Hülse (18) und der dritte Anbindungspunkt (16) mit einer Versteifungsstruktur (22) miteinander verbunden sind;
der zweite Anbindungspunkt, die zweite Hülse und der vierte Anbindungspunkt mit einer Versteifungsstruktur (22) miteinander verbunden sind;
**dadurch gekennzeichnet, dass**
die Versteifungsstruktur (22) mehrere Blechstrukturen umfasst;
eine erste Blechstruktur (24) mit einer Schweißverbindung (26) mit dem ersten Anbindungspunkt (12) und der ersten Hülse (18) verbunden ist;
eine zweite Blechstruktur (28) mit einer Schweißverbindung (26) mit dem dritten Anbindungspunkt (16) und der ersten Hülse (18) verbunden ist;
eine dritte Blechstruktur mit einer Schweißverbindung mit dem zweiten Anbindungspunkt und der zweiten Hülse verbunden ist und
eine vierte Blechstruktur mit einer Schweißverbindung mit dem vierten Anbindungspunkt und der zweiten Hülse verbunden ist.

2. Hilfsrahmen (10) nach Anspruch 1, **dadurch gekennzeichnet, dass** die erste Hülse (18) zwischen dem ersten Anbindungspunkt (12) und dem dritten Anbindungspunkt (16) angeordnet ist und dass die zweite Hülse zwischen dem zweiten Anbindungspunkt und dem vierten Anbindungspunkt angeordnet ist.

3. Hilfsrahmen (10) nach Anspruch 1 oder 2, **dadurch gekennzeichnet, dass** mindestens eine der Blechstrukturen (28) mehrere Blechelemente (30) umfasst und dass jedes Blechelement (30) gesondert mit der ersten Hülse (18) beziehungsweise der zweiten Hülse verschweißt ist.

4. Hilfsrahmen (10) nach einem der Ansprüche 1 bis 3, **dadurch gekennzeichnet, dass** mindestens eine erste Motorlagerhülse und eine zweite Motorlagerhülse vorgesehen ist und dass die erste Motorlagerhülse zwischen dem ersten Anbindungspunkt (12) und dem dritten Anbindungspunkt (16) angeordnet ist und dass die zweite Motorlagerhülse zwischen dem zweiten Anbindungspunkt und dem vierten Anbindungspunkt angeordnet ist.

5. Aggregatlagersystem (34) für ein Fahrzeug, mit einem Fahrzeugaufbau (14) mit mindestens einem Längsträger (36) mit einem Hilfsrahmen (10) nach einem der Ansprüche 1 bis 4 und mit jeweils einem in der ersten Hülse (18) und der zweiten Hülse angeordneten Aggregatlager (38).

6. Aggregatlagersystem (34) nach Anspruch 5, **dadurch gekennzeichnet, dass** der erste, zweite, dritte und vierte Anbindungspunkt an mindestens einem Längsträger (36) des Fahrzeugaufbaus (14) befestigt ist.

7. Aggregatlagersystem (34) nach Anspruch 6, **dadurch gekennzeichnet, dass** der erste, zweite, dritte und vierte Anbindungspunkt an mindestens einem Längsträger (36) des Fahrzeugaufbaus (14) geschweißt oder angeschraubt ist.

8. Fahrzeug mit mindestens einem elektrischen Aggregat und einem Aggregatlagersystem (34) nach einem der Ansprüche 5 bis 7, wobei das Aggregat mit dem Aggregatlagersystem (34) am Fahrzeug befestigt ist.

9. Hilfsrahmen (10) für ein Kraftfahrzeug
mit einem ersten Anbindungspunkt (12) und einem zweiten Anbindungspunkt zur Anbindung an einen Fahrzeugaufbau (14),
mit mindestens einer Hülse (18) zur Aufnahme eines Aggregatlagers (38) zur Lagerung eines Antriebsaggregats,
wobei der erste Anbindungspunkt (12) vom zweiten Anbindungspunkt beabstandet ist, wobei die Anbindungspunkte mit einem Verbindungselement in Querrichtung des Fahrzeugaufbaus (14) miteinander verbunden sind, und
mit einem dritten Anbindungspunkt (16) und einem vierten Anbindungspunkt,
wobei der erste Anbindungspunkt (12), die Hülse (18) und der dritte Anbindungspunkt (16) im eingebauten Zustand etwa in einer ersten Linie (20) in Querrichtung des Fahrzeugaufbaus (14) liegen und der zweite Anbindungspunkt, eine zweite Hülse und der vierte Anbindungspunkt im eingebauten Zustand etwa in einer zweiten Linie in Querrichtung des Fahrzeugaufbaus (14) liegen,
wobei
der erste Anbindungspunkt (12), die erste Hülse (18) und der dritte Anbindungspunkt (16) mit einer Versteifungsstruktur (22) miteinander verbunden sind;
der zweite Anbindungspunkt, die zweite Hülse und der vierte Anbindungspunkt mit einer Versteifungsstruktur (22) miteinander verbunden sind;
**dadurch gekennzeichnet, dass**
die Versteifungsstruktur (22) mehrere Blechstrukturen umfasst,
eine erste Blechstruktur (24) mit einer Schweißverbindung (26) mit dem ersten Anbindungspunkt (12) und der ersten Hülse (18) verbunden ist;
eine zweite Blechstruktur (28) mit einer Schweißverbindung (26) mit dem dritten Anbindungspunkt (16) und der ersten Hülse (18) verbunden ist;
eine dritte Blechstruktur mit einer Schweißverbindung mit dem zweiten Anbindungspunkt und der zweiten Hülse verbunden ist und
eine vierte Blechstruktur mit einer Schweißverbindung mit dem vierten Anbindungspunkt und der zweiten Hülse verbunden ist.

10. Hilfsrahmen (10) nach Anspruch 9, **dadurch gekennzeichnet, dass** die erste Hülse (18) zwischen dem ersten Anbindungspunkt (12) und dem dritten Anbindungspunkt (16) angeordnet ist und dass die zweite Hülse zwischen dem zweiten Anbindungspunkt und dem vierten Anbindungspunkt angeordnet ist.

## Claims

1. Subframe (10) for a motor vehicle, comprising a first attachment point (12) and a second attachment point for attaching to a vehicle body (14),
comprising at least one sleeve (18) for receiving an assembly mount (38) for mounting a drive assembly,
wherein the first attachment point (12) is spaced from the second attachment point, wherein the attachment points are connected to each other in the transverse direction of the vehicle body (14) by a connecting element,
wherein a third attachment point (16) and a fourth attachment point are provided, wherein the first attachment point (12), a first sleeve (18), and the third attachment point (16) in the installed state are located in a first line (20) in the longitudinal direction of the vehicle body (14) and
wherein the second attachment point, a second sleeve, and the fourth attachment point in the installed state are located in a second line in the longitudinal direction of the vehicle body (14),
wherein the first attachment point (12), the first sleeve (18), and the third attachment point (16) are connected to each other by a reinforcing structure (22);
the second attachment point, the second sleeve, and the fourth attachment point are connected to each other by a reinforcing structure (22);
**characterized in that**
the reinforcing structure (22) comprises a plurality of sheet metal structures;
a first sheet metal structure (24) is connected to the first attachment point (12) and the first sleeve (18) by a welded connection (26);
a second sheet metal structure (28) is connected to the third attachment point (16) and the first sleeve (18) by a welded connection (26);
a third sheet metal structure is connected to the second attachment point and the second sleeve by a welded connection and
a fourth sheet metal structure is connected to the fourth attachment point and the second sleeve by a welded connection.

2. Subframe (10) according to claim 1, **characterized in that** the first sleeve (18) is arranged between the first attachment point (12) and the third attachment point (16), **and in that** the second sleeve is arranged between the second attachment point and the fourth attachment point.

3. Subframe (10) according to claim 1 or 2, **characterized in that** at least one of the sheet metal structures (28) comprises a plurality of sheet metal elements (30), **and in that** each sheet metal element (30) is separately welded to the first sleeve (18) or the second sleeve.

4. Subframe (10) according to any of claims 1 to 3, **characterized in that** at least a first engine mount sleeve and a second engine mount sleeve are provided, **and in that** the first engine mount sleeve is arranged between the first attachment point (12) and the third attachment point (16), **and in that** the second engine mount sleeve is arranged between the second attachment point and the fourth attachment point.

5. Assembly mount system (34) for a vehicle, comprising a vehicle body (14) comprising at least one side member (36) comprising a subframe (10) according to any of claims 1 to 4 and comprising an assembly mount (38) arranged in each of the first sleeve (18) and the second sleeve.

6. Assembly mount system (34) according to claim 5, **characterized in that** the first, the second, the third, and the fourth attachment point are fastened to at least one side member (36) of the vehicle body (14).

7. Assembly mount system (34) according to claim 6, **characterized in that** the first, the second, the third, and the fourth attachment point are welded or screwed to at least one side member (36) of the vehicle body (14).

8. Vehicle comprising at least one electrical assembly and an assembly mount system (34) according to any of claims 5 to 7, wherein the assembly is fastened to the vehicle by the assembly mount system (34).

9. Subframe (10) for a motor vehicle
comprising a first attachment point (12) and a second attachment point for attaching to a vehicle body (14),
comprising at least one sleeve (18) for receiving an assembly mount (38) for mounting a drive assembly,
wherein the first attachment point (12) is spaced from the second attachment point, wherein the attachment points are connected to each other in the transverse direction of the vehicle body (14) by a connecting element, and comprising a third attachment point (16) and a fourth attachment point,
wherein the first attachment point (12), the sleeve (18), and the third attachment point (16) in the installed state are located approximately in a first line (20) in the transverse direction of the vehicle body (14) and the second attachment point, a second sleeve, and the fourth attachment point in the installed state are located approximately in a second line in the transverse direction of the vehicle body (14),
wherein the first attachment point (12), the first sleeve (18), and the third attachment point (16) are connected to each other by a reinforcing structure (22);
the second attachment point, the second sleeve, and the fourth attachment point are connected to each other by a reinforcing structure (22);
**characterized in that**
the reinforcing structure (22) comprises a plurality of sheet metal structures,
a first sheet metal structure (24) is connected to the first attachment point (12) and the first sleeve (18) by a welded connection (26);
a second sheet metal structure (28) is connected to the third attachment point (16) and the first sleeve (18) by a welded connection (26);
a third sheet metal structure is connected to the second attachment point and the second sleeve by a welded connection and
a fourth sheet metal structure is connected to the fourth attachment point and the second sleeve by a welded connection.

10. Subframe (10) according to claim 9, **characterized in that** the first sleeve (18) is arranged between the first attachment point (12) and the third attachment point (16), **and in that** the second sleeve is arranged between the second attachment point and the fourth attachment point.

## Revendications

1. Châssis auxiliaire (10) pour un véhicule automobile, comportant un premier point de liaison (12) et un deuxième point de liaison pour la liaison à une carrosserie (14) de véhicule,
comportant au moins un manchon (18) destiné à recevoir un palier de groupe (38) pour le placement d'un groupe d'entraînement,
dans lequel le premier point de liaison (12) est à distance du deuxième point de liaison, dans lequel les points de liaison sont raccordés entre eux par un élément de raccordement dans la direction transversale de la carrosserie (14) de véhicule, dans lequel un troisième point de liaison (16) et un quatrième point de liaison sont prévus,
dans lequel le premier point de liaison (12), un premier manchon (18) et le troisième point de liaison (16) sont situés, à l'état monté, sur une première ligne (20) dans la direction longitudinale de la carrosserie (14) de véhicule et dans lequel le deuxième point de liaison, un second manchon et le quatrième point de liaison sont situés, à l'état monté, sur une seconde ligne dans la direction longitudinale de la carrosserie (14) de véhicule,
dans lequel le premier point de liaison (12), le premier manchon (18) et le troisième point de liaison (16) sont raccordés entre eux par une structure de raidissement (22) ;
le deuxième point de liaison, le second manchon et le quatrième point de liaison sont raccordés entre eux par une structure de raidissement (22) ;
**caractérisé en ce que**
la structure de raidissement (22) comprend plusieurs structures en tôle ;
une première structure en tôle (24) est raccordée par un raccordement soudé (26) au premier point de liaison (12) et au premier manchon (18) ;
une deuxième structure en tôle (28) est raccordée par un raccordement soudé (26) au troisième point de liaison (16) et au premier manchon (18) ;
une troisième structure en tôle est raccordée par un raccordement soudé au deuxième point de liaison et au second manchon et
une quatrième structure en tôle est raccordée par un raccordement soudé au quatrième point de liaison et au second manchon.

2. Châssis auxiliaire (10) selon la revendication 1, **caractérisé en ce que** le premier manchon (18) est agencé entre le premier point de liaison (12) et le troisième point de liaison (16) et **en ce que** le second manchon est agencé entre le deuxième point de liaison et le quatrième point de liaison.

3. Châssis auxiliaire (10) selon la revendication 1 ou 2, **caractérisé en ce qu'**au moins une des structures en tôle (28) comprend plusieurs éléments en tôle (30) **et en ce que** chaque élément en tôle (30) est soudé séparément au premier manchon (18) et au second manchon, respectivement.

4. Châssis auxiliaire (10) selon l'une des revendications 1 à 3,
**caractérisé en ce qu'il** est prévu au moins un premier manchon de palier de moteur et un second manchon de palier de moteur **et en ce que** le premier manchon de palier de moteur est agencé entre le premier point de liaison (12) et le troisième point de liaison (16) **et en ce que** le second manchon de palier de moteur est agencé entre le deuxième point de liaison et le quatrième point de liaison.

5. Système de palier de groupe (34) pour un véhicule, comportant une carrosserie (14) de véhicule comportant au moins un longeron (36) comportant un châssis auxiliaire (10) selon l'une des revendications 1 à 4 et comportant respectivement un palier de groupe (38) agencé dans le premier manchon (18) et le second manchon.

6. Système de palier de groupe (34) selon la revendication 5, **caractérisé en ce que** les premier, deuxième, troisième et quatrième points de liaison sont fixés à au moins un longeron (36) de la carrosserie (14) de véhicule.

7. Système de palier de groupe (34) selon la revendication 6,
**caractérisé en ce que** les premier, deuxième, troisième et quatrième points de liaison sont soudés ou vissés sur au moins un longeron (36) de la carrosserie (14) de véhicule.

8. Véhicule comportant au moins un groupe électrique et un système de palier de groupe (34) selon l'une des revendications 5 à 7, dans lequel le groupe est fixé au véhicule par le système de palier de groupe (34).

9. Châssis auxiliaire (10) pour un véhicule automobile
comportant un premier point de liaison (12) et un deuxième point de liaison pour la liaison à une carrosserie (14) de véhicule,
comportant au moins un manchon (18) destiné à recevoir un palier de groupe (38) pour le placement d'un groupe d'entraînement,
dans lequel le premier point de liaison (12) est à distance du deuxième point de liaison, dans lequel les points de liaison sont raccordés entre eux par un élément de raccordement dans la direction transversale de la carrosserie (14) de véhicule, et comportant un troisième point de liaison (16) et un quatrième point de liaison, dans lequel le premier point de liaison (12), le manchon (18) et le troisième point de liaison (16) sont situés, à l'état monté, approximativement sur une première ligne (20) dans la direction transversale de la carrosserie (14) de véhicule, et le deuxième point de liaison, un second manchon et le quatrième point de liaison sont situés, à l'état monté, approximativement sur une seconde ligne dans la direction transversale de la carrosserie (14) de véhicule,
dans lequel le premier point de liaison (12), le premier manchon (18) et le troisième point de liaison (16) sont raccordés entre eux par une structure de raidissement (22) ;
le deuxième point de liaison, le second manchon et le quatrième point de liaison sont raccordés entre eux par une structure de raidissement (22) ;
**caractérisé en ce que**
la structure de raidissement (22) comprend plusieurs structures en tôle,
une première structure en tôle (24) est raccordée par un raccordement soudé (26) au premier point de liaison (12) et au premier manchon (18) ;
une deuxième structure en tôle (28) est raccordée par un raccordement soudé (26) au troisième point de liaison (16) et au premier manchon (18) ;
une troisième structure en tôle est raccordée par un raccordement soudé au deuxième point de liaison et au second manchon et
une quatrième structure en tôle est raccordée par un raccordement soudé au quatrième point de liaison et au second manchon.

10. Châssis auxiliaire (10) selon la revendication 9, **caractérisé en ce que** le premier manchon (18) est agencé entre le premier point de liaison (12) et le troisième point de liaison (16) **et en ce que** le second manchon est agencé entre le deuxième point de liaison et le quatrième point de liaison.
